Europäisches Patentamt

European Patent Office

Office européen des brevets

(11) Publication number: **0 577 839 A1**

## EUROPEAN PATENT APPLICATION
### published in accordance with Art. 158(3) EPC

(21) Application number: **92924913.4**

(22) Date of filing: **14.12.92**

(86) International application number:
**PCT/JP92/01625**

(87) International publication number:
**WO 93/15549 (05.08.93 93/19)**

(51) Int. Cl.5: **H02P 5/00**

(30) Priority: **23.01.92 JP 32607/92**

(43) Date of publication of application:
**12.01.94 Bulletin 94/02**

(84) Designated Contracting States:
**DE IT SE**

(71) Applicant: **FANUC LTD.**
**3580, Shibokusa Aza-Komanba, Oshino-mura**
**Minamitsuru-gun, Yamanashi 401-05(JP)**

(72) Inventor: **YOSHIDA, Osamu, Fanuc Dai-3**
**Vira-karamatsu**
**3527-1, Shibokusa,**
**Oshino-mura**
**Minamitsuru-gun, Yamanashi401-05(JP)**
Inventor: **ARITA, Soichi, Room 10-305, Fanuc**

Manshonharimomi
**3533-1, Shibokusa,**
**Oshino-mura**
**Minamitsuru-gun, Yamanashi 401-05(JP)**
Inventor: **KATO, Tetsuaki, Room 8-101, Fanuc**
**Manshonharimomi**
**3511-1, Shibokusa,**
**Oshino-mura**
**Minamitsuru-gun, Yamanashi 401-05(JP)**

(74) Representative: **Billington, Lawrence Emlyn et al**
**Haseltine Lake & Co**
**Hazlitt House**
**28, Southampton Buildings**
**Chancery Lane**
**London WC2A 1AT (GB)**

(54) **SERVO CONTROL METHOD.**

(57) A servo control method capable of raising a band of speed loop stably and setting position loop gain to a satisfactory level. A torque command from a speed loop is sent through a filter whose transfer function has a numerator of the second degree and a denominator of the third degree. The filter has frequency characteristics shown in the figure in which at resonance frequency of an object to be controlled, phase lag in the band of speed loop is decreased and the gain in a high frequency region is decreased. This enables the gain of the speed loop to be increased stably without causing oscillation. Also, the high frequency disturbance can be removed.

Rank Xerox (UK) Business Services
(3.10/3.6/3.3.1)

# FIG.6

## Technical Field

The present invention relates to a method for removing a mechanical resonance system in a position control system such as a machine tool, industrial machine, robot, etc., of which moving parts are driven by means of a motor for controlling their positions.

## Background Art

In the case of a system in which moving parts of an NC machine tool, industrial machines controlled by means of an NC device or robot, etc. are driven by means of a motor; the position and speed are feedback-controlled, and a speed reducer is connected to the output shaft of the motor so that the moving parts are driven through the speed reducer, the resonance frequency exists in a low-frequency region ranging from several hertz to scores of hertz due to the low mechanical rigidity of the speed reducer section. Even with use of a motor of a direct-drive type, moreover, the resonance frequency only exists in a frequency region from scores of hertz to a hundred hertz. Thus, in the control system having its resonance frequency in the low-frequency region, the resonance frequency exists within the band of a speed loop of a servo control system for position and speed control. In many cases, therefore, it is difficult to increase the speed loop gain.

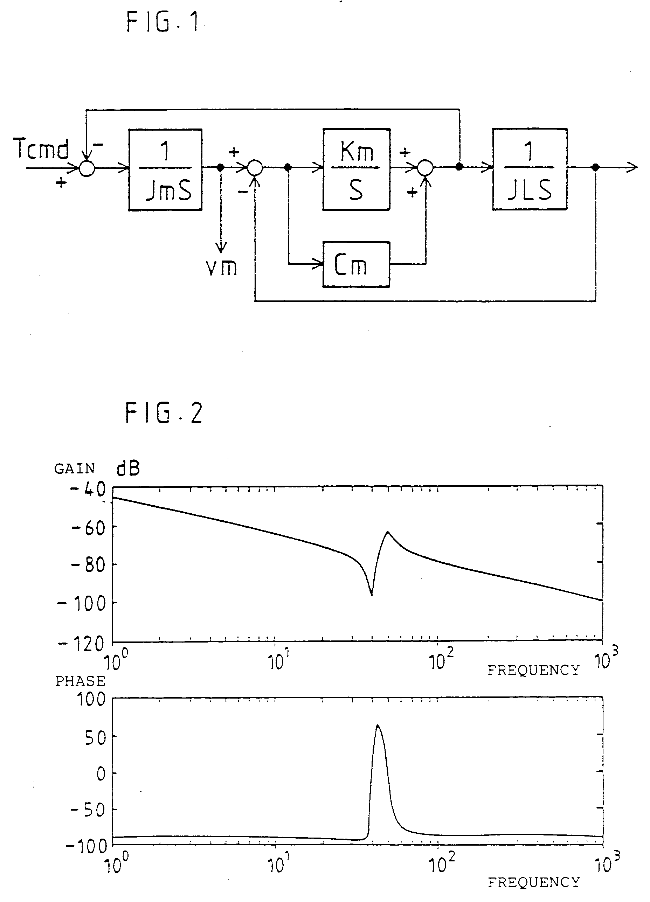

Fig. 1 is a block diagram showing the stages ranging from the output of the torque command to the motor to the load, where the transfer section ranging from the stage of the motor output, such as that of the aforesaid speed reducer, to the stage of the input to the load is considered to be a spring system. In Fig. 1, Tcmd represents the torque command to the motor; Jm, motor inertia; Km, spring constant; Cm, coefficient of viscosity; $J_L$, load inertia; and vm, motor output speed. Thus, a transfer function G (= vm/Tcmd) of the motor output speed vm to the torque command Tcmd is given by the following expression:

$$\frac{Vm}{Tcmd} = \frac{1}{Jm\ S} \cdot \frac{S^2 + (Cm/J_L)S + Km/J_L}{S^2 + [(1/J_L)+(1/Jm)]Cm\ S + [(1/J_L)+(1/Jm)]Km} \quad ---- \ (1)$$

Fig. 2 shows the results of measurement of the frequency characteristics of this transfer function, in which the gain has its peak at the resonance frequency. In the example shown in Fig. 2, the resonance frequency of an object of control is 50 Hz. If the damping factor of this control system is high, the peak is low, and arouses no substantial problem. If the damping factor is low, however, the peak is so high that motor drive may cause vibration at this frequency, or raising the band of the speed loop may cause oscillation.

Conventionally, therefore, the band of the speed loop is raised to the highest level within a range such that no oscillation is caused, and the gain of the speed loop is determined in accordance with this band. Also, a simple low-pass filter is inserted into the system so that the torque command is applied to the motor through this low-pass filter, whereby the peak gain is lowered. If the low-pass filter is inserted, however, the phase lag occurs as to the control system itself, so that it becomes inevitably difficult to raise the band of the speed loop.

Thus, the gain at the resonance frequency can be lowered by using a notch filter, which is capable of lowering only the gain at the resonance frequency fc, in place of the aforesaid low-pass filter. A transfer function G F1 of this notch filter may be expressed as follows ($\omega c = 2\pi \cdot fc$):

$$G \ F1 \ = \ \frac{S^2 \ + \ 2 \zeta_2 \ \omega c \ S \ + \ \omega c^2}{S^2 \ + \ 2 \zeta_1 \ \omega c \ S \ + \ \omega c^2}$$

$$---- \ (2)$$

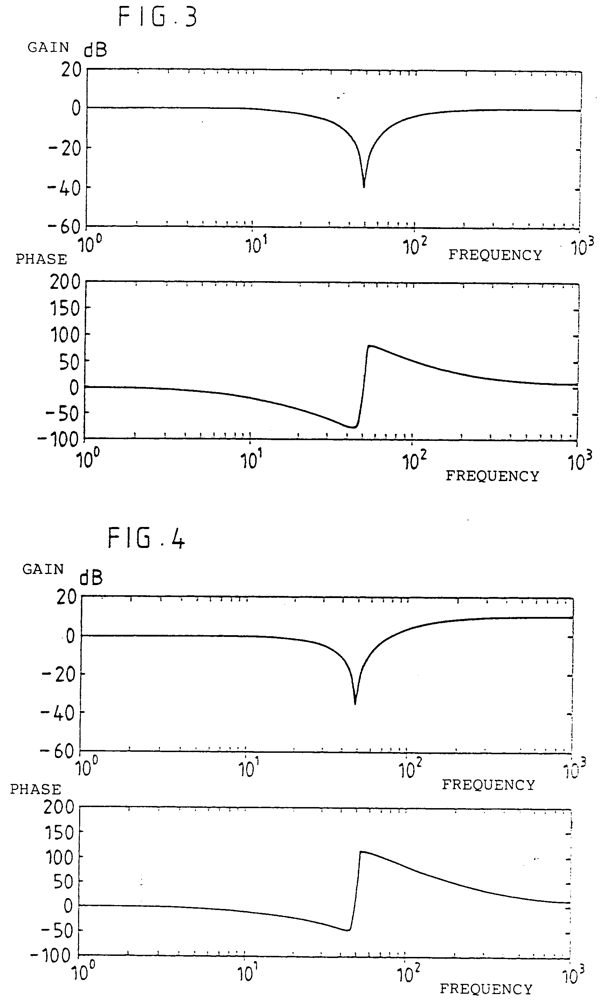

By making the resonance frequencies in the denominator and numerator equal, approximating a damping factor $\zeta_1$ in the denominator to 1, and making a damping factor $\zeta_2$ in the numerator lower than 1 in this manner, so-called notch filter can be obtained, and the frequency characteristics shown in Fig. 3 can be obtained ($\zeta_1$ = 1, $\zeta_2$ = 0.01, and fc = 50 Hz in Fig. 3). By making a cutoff frequency equal to a mechanical resonance frequency, as shown in the upper diagram of Fig. 3, the gain which has its peak at the resonance frequency can be restrained. When using this notch filter, however, the phase lags at a frequency lower than the resonance frequency, as shown in the lower diagram of Fig. 3, so that it is difficult to raise the band of the speed loop.

In order to put forward the phase of the frequency lower than the resonance frequency of the notch filter, therefore, a resonance frequency $f_1$ ($2\pi f_1$ = $\omega_1$) in the denominator is made higher than a resonance frequency $f_2$ ($2\pi f_2$ = $\omega_2$) in the numerator ($\omega_1$ > $\omega_2$ ), and a transfer function G F2 of the filter is given by

$$G \ F2 \ = \ \frac{S^2 \ + \ 2 \zeta_2 \ \omega_2 \ S \ + \ \dot{\omega}_2^2}{S^2 \ + \ 2 \zeta_1 \ \omega_1 \ S \ + \ \omega_1^2} \cdot \frac{\omega_1^2}{\omega_2^2}$$

$$---- \ (3)$$

If the resonance frequency ($\omega_1$) of the denominator, which is generally referred to as a lag element, is raised, that is, if the time constant is reduced, phase lags are caused to occur at higher frequencies. By approximating the damping factor $\zeta_1$ in the denominator to 1 and making the damping factor $\zeta_2$ in the numerator lower than 1, the frequency characteristics as are shown in Fig. 4 can be obtained ($\zeta_1$ = 1, $\zeta_2$ = 0.01, $f_1$ = 90 Hz, and $f_2$ = 50 Hz in Fig. 4). The phase lags within the band of the speed loop are reduced; however, the gain increases at frequencies higher than the resonance frequency, as shown in Fig. 4, so that the control system is easily influenced by high-frequency disturbance, thereby causing the instability of the control system.

According to the conventional method, as described above, the band of the speed loop cannot easily be raised, and, in many cases, a desired position loop gain cannot be obtained.

Disclosure of the Invention

The object of the present invention is to provide a servo control method in which the band of a speed loop can be raised steadily so that a satisfactory value can be secured for the position loop gain.

According to the present invention, in order to achieve the above object, there is provided a servo control method, in which a torque command delivered from a speed loop of a control system is given to a servomotor for controlling the position of an object of control through a filter. In this method, the filter has a transfer function whose denominator and numerator degrees are three-dimensional and two-dimensional, respectively; coefficients in the numerator expression are determined on the basis of a damping factor, which depends on the resonance frequency of the object of control and the size of the gain of the resonance frequency; and coefficients in the denominator expression are determined by selecting a resonance frequency and a damping factor such that desired response frequency characteristics can be obtained for the determined numerator coefficients.

Preferably, the transfer function of the filter is given by the following expression:

4

$$G\ F3\ =\ \frac{S^2 + 2\zeta_2\omega_2 S + \omega_2^2}{S^3 + 2\zeta_1\omega_1 S^2 + 2\zeta_1\omega_1^2 S + \omega_1^3} \cdot \frac{\omega_1^3}{\omega_2^2}$$

where an angular velocity corresponding to the resonance frequency of the object of control is $\omega_2$; a damping factor which is determined depending on the gain peak value at the resonance frequency is $\zeta_2$; and the resonance frequency and the damping factor selected for the denominator of the transfer function are $\omega_1$ and $\zeta_1$, respectively.

Further preferably, the resonance frequency $\omega_1$ and the damping factor $\zeta_1$ in the above expression are selected by finding values at which the gain decreases in the vicinity of the angular velocity $\omega_2$ in relation to the damping factor $\zeta_2$, which is dependent on the angular velocity $\omega_2$ corresponding to the resonance frequency of the object of control and the gain peak value at the resonance frequency; phase lags within the band of the speed loop are reduced; and the gain can be lowered in a high-frequency region.

As described above, according to the present invention, the filter is arranged so that the denominator and numerator are three-dimensional and two-dimensional, respectively, and therefore, the gain in the high-frequency region can be lowered. Since the gain is lowered in the vicinity of the resonance frequency of the object of control, the peak of the gain at the resonance frequency of the object of control is restrained with respect to the whole control system. Also, the phase lags within the band of the speed loop are reduced.

Brief Description of the Drawings

Fig. 1 is a block diagram showing the stages ranging from a torque command to a motor to a load, in which a transfer section from a motor output to an input to the load is regarded as a spring system;

Fig. 2 is a Bode diagram showing frequency characteristics in the block diagram shown in Fig. 1;

Fig. 3 is a Bode diagram showing frequency characteristics obtained when a torque command is outputted through a notch filter;

Fig. 4 is a Bode diagram showing frequency characteristics obtained when a resonance frequency in the numerator of a transfer function of the notch filter is made higher than a resonance frequency in the denominator in order to put forward the phases of frequencies lower than the resonance frequency;

Fig. 5 is a block diagram illustrating one embodiment of the present invention; and

Fig. 6 is a Bode diagram showing frequency characteristics according to the one embodiment of the present invention.

Best Mode of Carrying Out the Invention

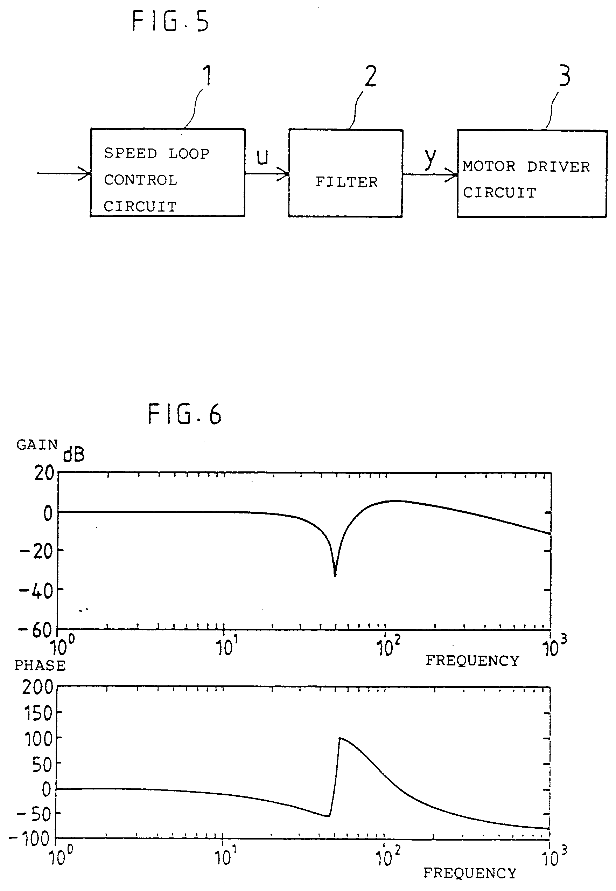

Fig. 5 is a block diagram showing the principal part of servomotor control according to one embodiment of the present invention. In the present invention, a torque command u delivered from a speed loop control circuit (speed loop process) 1 is inputted to a filter 2, and the output of the filter is inputted as a revised torque command y, to a motor driver circuit 3. The speed loop control circuit (speed loop processing) 1 is the same as a conventional one, and the motor drive circuit 3 corresponds to a circuit shown in the block diagram of Fig. 1.

As expressed by following expression (4), the transfer function G F3 of this filter 2 has a denominator of third degree and a numerator of second degree in order to lower the high-frequency gain as given in the following expression (4):

$$G\ F3\ =\ \frac{S^2 + 2\zeta_2\omega_2 S + \omega_2^2}{S^3 + 2\zeta_1\omega_1 S^2 + 2\zeta_1\omega_1^2 S + \omega_1^3} \cdot \frac{\omega_1^3}{\omega_2^2}$$

$$----(4)$$

In the above expression (4), an angular velocity $\omega_2$ in the numerator is an angular velocity ($\omega_2 = 2\pi fc$), which corresponds to a resonance frequency fc of an object of control, and a damping factor $\zeta_2$ in the

numerator is a value, which depends on the size of the gain at the resonance frequency of the object of control. Both these values will be determined naturally when the arrangement of the object of control is decided. Further, an angular velocity $\omega_1$ and a damping factor $\zeta_1$ in the denominator, which are dependent on the phase characteristics within the band of a servo system and the high-frequency disturbance characteristics, are determined by experiment or simulation so that, in consideration of frequency and phase lags which lower the gain, the peak gain at the resonance frequency of the object of control is lowered with respect to the angular velocity $\omega_2$ and the damping factor $\zeta_2$ in the numerator, that the phase lag will not occur within the band of a speed loop, and that the gain is lowered in a high-frequency region to remove high-frequency disturbance.

For example, if the resonance frequency fc of the object of control and the resonance frequency in the denominator are 50 Hz and 90 Hz, respectively, that is, if we have $\omega_2 = 2\pi \times 50$ and $\omega_1 = 2\pi \times 90$, as shown in Fig. 6 frequency characteristics can be obtained where the damping factors in the denominator and numerator are $\zeta_1 = 1$ and $\zeta_2 = 0.01$, respectively. As seen from Fig. 6, a filter obtainable is capable of lowering the gain in the vicinity of 50 Hz for the resonance frequency of the object of control, reducing phase lags within the band of the speed loop, and lowering the gain in the high-frequency region.

The following is a description of procedures for digitally processing the filter as servo control is effected digitally by means of a processor.

First, the transfer function G F3 of the filter 2 given by the expression (4) is converted into a state equation in a controllable regular form. To attain this, the transfer function G F3 is transformed into a transfer function G F3' given as follows:

$$G\ F3' = \frac{y}{u} = \frac{c_3 S^2 + c_2 S + c_1}{S^3 + a_3 S^2 + a_2 S + a_1} \qquad \text{---- (5)}$$

A state equation of the following form is obtained from the transfer function given by the above expression (5).

dx/dt = Ac • x + Bc • u,
Y = Cc • x.    (6)

If individual matrix and vector elements in this expression (6) are represented by coefficients of the transfer function G F3', they can be given as follows:

$$Ac = \begin{bmatrix} 0 & 1 & 0 \\ 0 & 0 & 1 \\ -a_1 & -a_2 & -a_3 \end{bmatrix} \qquad Bc = \begin{bmatrix} 0 \\ 0 \\ 1 \end{bmatrix}$$

$$Cc = [\ c_1 \quad c_2 \quad c_3] \qquad x = \begin{bmatrix} x_1 \\ x_2 \\ x_3 \end{bmatrix}$$

$$---- (7)$$

In the above expression (7), the individual coefficients of the transfer function G F3, given by expression (4), are set and known, and the coefficients of the transfer function G F3', given by expression (5) obtained by transforming the transfer function G F3, can be derived from the known coefficients of the transfer function G F3. As a result, the matrixes and vector given by the aforesaid expression (7) are also known.

Then, if a state equation of a continuous system is transformed into a state equation of a discrete-value system by using the following expression:

$$Ad = \exp[Ac \cdot T],$$
$$Bd = \int_0^T \exp[Ac \cdot \tau]d\tau \cdot Bc \qquad --- (8),$$

we obtain

$$x(n+1) = Ad \cdot x(n) + Bd \cdot u(n),$$
$$y(n) = Cc \cdot x(n). \qquad (9)$$

Matrixes and vector in this expression (9) are given as follows:

$$Ad = \begin{bmatrix} a_{11} & a_{12} & a_{13} \\ a_{21} & a_{22} & a_{23} \\ a_{31} & a_{32} & a_{33} \end{bmatrix} \qquad Bd = \begin{bmatrix} b_1 \\ b_2 \\ b_3 \end{bmatrix}$$

$$Cc = [\ c_1 \quad c_2 \quad c_3\ ] \qquad x(n) = \begin{bmatrix} x_1(n) \\ x_2(n) \\ x_3(n) \end{bmatrix}$$

$$---- (10)$$

Since the matrix and vector elements Ad, Bd and Cc given by the above expression (10) are obtained on the basis of expression (7), a computation according to expression (9) is made for every predetermined period with respect to a torque command u(n) outputted by the speed loop process (speed loop circuit 1), whereupon a filtered torque command y(n) is outputted.

More specifically, the filter output y(n) is obtained by multiplying a state variable vector x(n), formed of values in a register storing state variables x1, x2 and x3, by the matrix Cc (by making a computation according to the lower equation of expression (9)), and is delivered to the motor driver circuit 3. Then, the torque command u(n) outputted by the speed loop processing is read, and a computation according to the upper equation of expression (9) is made. Then, the obtained values of the state variables, x1, x2 and x3, are stored in the register, whereupon processing for the period concerned is finished. Thereafter, the computation according to the aforesaid expression (9) is made for every period in accordance with the values in the register, which stores the state variables x1, x2 and x3, and the torque command u(n) outputted by the speed loop processing, and the torque command y(n), compensated by filtering, is delivered to the motor driver circuit. At the start of operation, the values in the register storing the state variables x1, x2 and x3 are initialized at 0, and the filter output y(n) is delivered delaying by one period in relation to the output u(n) of the speed loop processing.

By using of the filter whose transfer function is given by expression (4), as described above, the present invention can lower the peak gain at the resonance frequency of the object of control, reduce the phase lags within the band of the speed loop, and lower the gain in the high-frequency region, as shown in Fig. 6, so that the gain of the speed loop can be increased steadily without causing oscillation. Also, the high-frequency disturbance can be removed.

## Claims

1. A servo control method designed to deliver a torque command from a speed loop of a control system to a servomotor for controlling the position of an object of control through a filter, wherein:

   said filter has a transfer function whose denominator and numerator are of third degree and second degree respectively;

   coefficients in the expression of numerator are determined on the basis of the resonance frequency of the object of control and the damping factor which are dependent on the size of the gain of the resonance frequency; and

   coefficients in the expression of denominator are determined by selecting a resonance frequency and a damping factor by which desired response frequency characteristics can be obtained in relation to said determined numerator coefficients.

2. A servo control method according to claim 1, wherein said transfer function of said filter is given by the following expression:

$$G\,F3 = \frac{S^2 + 2\zeta_2\,\omega_2 S + \omega_2^2}{S^3 + 2\zeta_1\,\omega_1 S^2 + 2\,\zeta_1\,\omega_1^2\,S + \omega_1^3} \cdot \frac{\omega_1^3}{\omega_2^2}$$

   where, for said filter, an angular velocity corresponding to the resonance frequency of the object of control is $\omega_2$; a damping factor which is determined depending on the gain peak value at said resonance frequency is $\zeta_2$; and the resonance frequency and the damping factor selected for the denominator of the transfer function are $\omega_1$ and $\zeta_1$, respectively.

3. A servo control method according to claim 2, wherein the resonance frequency $\omega_1$ and the damping factor $\zeta_1$ in the denominator of said expression are selected by finding values at which the gain lowers in the vicinity of said angular velocity $\omega_2$; phase lags within the band of the speed loop are reduced; and the gain can be lowered in a high-frequency region, in relation to the angular velocity $\omega_2$ corresponding to the resonance frequency of said object of control and the damping factor $\zeta_2$, which is dependent on the gain peak value at the resonance frequency.

FIG. 1

FIG. 2

# F I G . 3

# F I G . 4

FIG. 5

```
        1                2                3
┌──────────────┐   ┌──────────┐   ┌──────────────┐
│ SPEED LOOP   │ u │          │ y │ MOTOR DRIVER │
→│ CONTROL      │──→│  FILTER  │──→│ CIRCUIT      │
│ CIRCUIT      │   │          │   │              │
└──────────────┘   └──────────┘   └──────────────┘
```

FIG. 6

INTERNATIONAL SEARCH REPORT

International application No.

PCT/JP92/01625

## A.  CLASSIFICATION OF SUBJECT MATTER

Int. Cl$^5$  H02P5/00

According to International Patent Classification (IPC) or to both national classification and IPC

## B.  FIELDS SEARCHED

Minimum documentation searched (classification system followed by classification symbols)

Int. Cl$^5$  H02P5/00, H02P7/00

Documentation searched other than minimum documentation to the extent that such documents are included in the fields searched

| Jitsuyo Shinan Koho | 1960 - 1991 |
| Kokai Jitsuyo Shinan Koho | 1971 - 1991 |

Electronic data base consulted during the international search (name of data base and, where practicable, search terms used)

## C.  DOCUMENTS CONSIDERED TO BE RELEVANT

| Category* | Citation of document, with indication, where appropriate, of the relevant passages | Relevant to claim No. |
|---|---|---|
| X | JP, A, 60-39397 (Yasukawa Electric Mfg. Co., Ltd.), March 1, 1985 (01. 03. 85), (Family: none) | 1-3 |

☐  Further documents are listed in the continuation of Box C.          ☐  See patent family annex.

| | |
|---|---|
| *       Special categories of cited documents:<br>"A"   document defining the general state of the art which is not considered to be of particular relevance<br>"E"   earlier document but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| March 8, 1993 (08. 03. 93) | March 30, 1993 (30. 03. 93) |

| Name and mailing address of the ISA/ | Authorized officer |
|---|---|
| Japanese Patent Office | |
| Facsimile No. | Telephone No. |

Form PCT/ISA/210 (second sheet) (July 1992)